# EUROPÄISCHE PATENTSCHRIFT

(11) **EP 4 321 350 B1**
(45) Veröffentlichungstag und Bekanntmachung des Hinweises auf die Patenterteilung: **15.10.2025**
(21) Anmeldenummer: 23190367.5
(22) Anmeldetag: 08.08.2023
(51) Int. Cl.: B60C 11/12

(54) **FAHRZEUGLUFTREIFEN**
PNEUMATIC TYRE FOR VEHICLES
BANDAGE PNEUMATIQUE POUR VÉHICULE

(30) Priorität: 11.08.2022 DE 102022208348
(43) Veröffentlichungstag der Anmeldung: 14.02.2024
(73) Patentinhaber: Continental Reifen Deutschland GmbH, 30175 Hannover (DE)
(72) Erfinder: Dr. Karow, Malte, 30165 Hannover (DE); Wiese, Klaus, 30165 Hannover (DE); Bauer, Claudia, 30165 Hannover (DE); Wackerhage, Tanja, 30165 Hannover (DE); Pang-Jian-Xiang, Edwin, 30165 Hannover (DE)
(74) Vertreter: Continental Corporation

(56) Entgegenhaltungen:
- WO-A1-2007/028438
- WO-A1-2019/001790
- WO-A1-2022/100799
- JP-A- 2006 151 233

## Beschreibung

Die Erfindung betrifft einen Fahrzeugluftreifen, insbesondere ein PKW-Winterreifen, mit einem Laufstreifen mit in den Randbereichen des Laufstreifens angeordneten sich in axialer Richtung erstreckenden schulterseitigen Blöcken mit überwiegend parallel zueinander verlaufenden Blockkanten und mit mittleren Blöcken mit überwiegend parallel zueinander verlaufenden Blockkanten zwischen den in dem einen Randbereich des Laufstreifens angeordneten, schulterseitigen Blöcken und den in dem anderen Randbereich des Laufstreifens angeordneten, schulterseitigen Blöcken, wobei die überwiegend parallel zueinander verlaufenden Blockkanten der mittleren Blöcke höchstens um einen Winkel von kleiner als 30° bevorzugt kleiner als 20° und weiter bevorzugt kleiner als 10° divergieren und die überwiegend parallel zueinander verlaufenden Blockkanten der schulterseitigen Blöcke um einen Winkel von kleiner als 30° bevorzugt kleiner als 20° und weiter bevorzugt kleiner als 10° divergieren,
wobei die schulterseitigen Blöcke und die mittleren Blöcke jeweils mit zumindest zwei in Draufsicht parallel zueinander verlaufenden sich zur axialen Richtung des Fahrzeugluftreifens mit einer Abweichung von kleiner als 45° auf der Umfangsfläche des Fahrzeugluftreifens erstreckenden Einschnitten versehen sind, welche eine Breite von 0,4 mm bis 0,8 mm und an ihrer tiefsten Stelle eine Tiefe von mindestens 50% der Profiltiefe aufweisen, wobei die schulterseitigen Blöcke und die mittleren Blöcke jeweils mit mehreren Mikrorillen mit einer Breite von 0,1 mm bis 0,3 mm und einer Tiefe von 0,1 mm bis 0,3 mm versehen sind, wobei sich die Mikrorillen zu den Einschnitten in Draufsicht parallel und kreuzungsfrei erstrecken, wobei die schulterseitigen Blöcke jeweils mit zumindest zwei in Draufsicht parallel zueinander verlaufenden sich überwiegend in Umfangsichtung des Fahrzeugluftreifens erstreckenden Quer-Mikrorillen mit einer Breite von 0,2 mm bis 0,6 mm und einer Tiefe von 0,6 mm bis 3 mm versehen sind.

Ein Fahrzeugluftreifen der eingangs genannte Art ist beispielsweise aus der WO 2022/100799 A1 bekannt. Dieser Fahrzeugluftreifen weist einen Laufstreifen mit in schulterseitigen Blockreihen angeordneten schulterseitigen Blöcken und mittleren Blöcken auf. Die Blöcke sind jeweils mit Einschnitten versehen, die in Draufsicht zur axialen Richtung unter einem Winkel von bis zu 45° verlaufen und eine Breite von 0,4 mm bis 0,8 mm sowie eine maximale Tiefe (Tiefe an der tiefsten Stelle) von mindestens 50% der Profiltiefe aufweisen. Ferner sind die Blöcke jeweils mit sich in Draufsicht parallel zu den Einschnitten erstreckenden Mikrorillen mit einer Breite und einer Tiefe von jeweils 0,2 mm bis 0,7 mm versehen. In den schulterseitigen Blöcken sind bei einem gezeigten Ausführungsbeispiel darüber hinaus jeweils zwei Quer-Mikrorillen ausgebildet, welche zur Umfangsrichtung unter einem Winkel von 0° bis 15° verlaufen und an ihren Endbereichen jeweils eine trichterartige Erweiterung aufweisen. Die Mikrorillen sollen eine Ableitung des Wasserfilms gewährleisten, wobei weiterhin eine gute Kraftübertragung auf den Untergrund sowie gute Nassbrems- und Schneegriffeigenschaften gegeben sein sollen. Die trichterförmige Verbreiterung verbessert die Wasseraufnahme und Wasserableitung in die Querrillen und wirkt beim Fahren auf Schnee als kleine "Schneetraktionstasche", sodass über den Effekt der Schnee-Schnee-Reibung der Schneegriff verbessert ist.

Aus der WO 2007/028438 A1 ist ein Fahrzeugluftreifen mit einem Laufstreifen mit schulterseitigen Blöcken und bandartig verbundenen, mittleren Blöcken bekannt, wobei die Blöcke jeweils mit zur axialen Richtung unter einem Winkel von 0° (schulterseitige Blöcke) bzw. etwa 30° (mittlere Blöcke) verlaufenden Einschnitten mit einer Breite von größer 0,4 mm und höchstens 0,8 mm und einer maximalen Tiefe von bis zu 100% der Profiltiefe versehen sind. Die Blöcke sind ferner jeweils mit in Draufsicht sich parallel zu den Einschnitten erstreckenden Mikrorillen mit einer Breite von 0,1 mm bis 0,4 mm, insbesondere von bis zu 0,3 mm, und einer Tiefe von 10% bis 90% der Profiltiefe versehen. Die Profiltiefe beträgt 7 mm bis 8 mm, sodass die Tiefe der Mikrorillen 0,7 mm bis 7,2 mm beträgt. Die schulterseitigen Blöcke sind darüber hinaus jeweils mit einer oder mehreren in Umfangsrichtung durchquerenden Quer-Mikrorille(n) versehen. In den mittleren Blöcken verlaufen jeweils zwei paarweise in Umfangsrichtung ausgerichtete Quer-Mikrorillen. Der Fahrzeugluftreifen soll - unter Aufrechterhaltung des Brems- und Traktionsverhaltens auf trockener und nasser Fahrbahn - gute Griffeigenschaften auf winterlichen Fahrbahnen aufweisen.

Die WO 2019/001790 A1 offenbart einen Fahrzeugluftreifen mit einem Laufstreifen mit schulterseitigen Blöcken und mittleren Blöcken mit jeweils zumindest zwei in Draufsicht parallel zueinander verlaufenden Einschnitten mit einer Breite von 0,4 mm bis 0,8 mm und einer maximalen Tiefe von mindestens 50% der Profiltiefe. Die schulterseitigen Blöcke und die mittleren Blöcke sind ferner jeweils mit mehreren in Draufsicht parallel zu den Einschnitten verlaufenden Mikrorillen mit einer Breite und einer Tiefe von jeweils 0,2 mm bis 0,5 mm versehen. Die Einschnitte und Mikrorillen in den schulterseitigen Blöcken verlaufen in Draufsicht zumindest über den Großteil ihrer Erstreckung in Gestalt von aneinander anschließenden, abwechselnd in die eine und in die andere Umfangsrichtung weisenden Trapezen. Die Einschnitte und Mikrorillen in den mittleren Blöcken verlaufen in Draufsicht wellen- oder zickzack-förmig. Die schulterseitigen Blöcke sind bevorzugt mit die Mikrorillen und Einschnitte kreuzenden Quer-Mikrorillen versehen. Der Reifen soll optimale Winterfahreigenschaften und eine gute Kraftübertragung zum Untergrund aufweisen.

An PKW-Winterreifen werden einander widersprechende Anforderungen gestellt. Sie sollen eine gute Haftung auf glattem Eis ermöglichen, wofür große Kontaktflächen des Winterreifens mit dem glatten Eis vorteilhaft sind. Weiterhin sollen sie eine gute Haftung auf Schnee und aufgerautem Eis ermöglichen, was über strukturierte Kontaktflächen durch Einschnitte in Blöcken der Winterreifen ermöglicht wird. Derartige Einschnitte verringern jedoch die Kontaktfläche auf glattem Eis.

Vor diesem Hintergrund liegt der Erfindung die Aufgabe zugrunde, einen PKW-Winterreifen derart auszuführen, dass bei einer guten Haftung auf glattem Eis auch eine gute Haftung bei Schnee oder aufgerautem Eis ermöglicht wird.

Diese Aufgabe wird gelöst mit einem PKW-Winterreifen gemäß den Merkmalen des Patentanspruches 1. Die Unteransprüche betreffen besonders zweckmäßige Weiterbildungen der Erfindung.

Die schulterseitigen Blöcke sind in axialer Richtung in den Randbereichen des Laufstreifens angeordnet.

Als Draufsicht wird eine senkrechte Betrachtung des Laufstreifens oder eines Abschnitts des Laufstreifens verstanden.

Die mittleren Blöcke sind jeweils mit zumindest zwei in Draufsicht parallel zueinander verlaufenden sich überwiegend in Umfangsichtung des Fahrzeugluftreifens erstreckenden Quer-Mikrorillen mit einer Breite von 0,2 mm bis 0,6 mm und einer Tiefe von 0,6 mm bis 3 mm versehen,
wobei der Abstand zwischen zwei Quer-Mikrorillen in schulterseitigen Blöcken größer als 3 mm und kleiner als 10 mm ist und
wobei der Abstand zwischen zwei Quer-Mikrorillen in mittleren Blöcken größer als 2 mm und kleiner als 7 mm ist.

Durch die Erstreckung der Einschnitte und Mikrorillen in axialer Richtung und die Erstreckung der Quer-Mikrorillen überwiegend in Umfangsrichtung kreuzen sich die Quer-Mikrorillen mit den Einschnitten und Mikrorillen. Die Blöcke werden hierdurch in Teilflächen unterteilt, die einerseits jeweils eine besonders kleine Kontaktfläche ausbilden, die besonders geeignet sind Kräfte in feine Strukturen des Untergrunds zu übertragen. Andererseits sind die Teilflächen zu benachbarten Teilflächen flexibel an den Blöcken angebunden, so dass sie auch bei einem erhöhten Schlupf über eine längere Dauer mit feinen Strukturen in Kontakt stehen und Kräfte übertragen können. Eine besonders gute Haftung auf Schnee und aufgerautem Eis wird ermöglicht. Die Mikrorillen sowie die Quer-Mikrorillen weisen eine besonders geringe Breite auf, sodass eine große Kontaktfläche auf glattem Eis gegeben ist und eine gute Haftung ermöglicht wird.

Der besonders kleine Abstand zwischen den Quer-Mikrorillen in den schulterseitigen Blöcken erzeugt besonders kleine Teilflächen, wodurch Kräfte in feine Strukturen des Untergrundes besonders gut übertragen werden können.

Der Mindestabstand zwischen den Quer-Mikrorillen führt zu Teilflächen, die eine ausreichende Größe und Festigkeit haben, um effizient Kräfte in den Untergrund zu übertragen. Weiterhin wird hierdurch eine ausreichende Kontaktfläche zwischen dem Fahrzeugreifen und einem glatten Eis als Untergrund ermöglicht, da der Flächenanteil der Quer-Mikrorillen geringgehalten wird.

Eine bevorzugte Ausführungsform sieht vor, dass der Abstand zwischen zwei Einschnitten in schulterseitigen Blöcken und beziehungsweise oder in mittleren Blöcken kleiner als 7 mm ist. Ein besonders kleiner Abstand zwischen den Einschnitten erzeugt besonders kleine Teilflächen, wodurch Kräfte in feine Strukturen des Untergrundes besonders gut übertragen werden können.

Eine weitere bevorzugte Ausführungsform sieht vor, dass der Abstand zwischen zwei Quer-Mikrorillen in schulterseitigen Blöcken und beziehungsweise oder in mittleren Blöcken kleiner ist als der doppelte, bevorzugt der anderthalbfache und weiter bevorzugt der einfache Abstand zwischen zwei Einschnitten. Durch eine Annäherung des Abstandes zwischen zwei Quer-Mikrorillen zu dem Abstand zwischen zwei Einschnitten, wird die Oberfläche der Teilflächen einem Quadrat angenähert. Hierdurch wird eine besonders hohe Kraftübertragung sowohl in Umfangsrichtung als auch in axialer Richtung des Fahrzeugreifens ermöglicht. Weiterhin werden kleine Teilflächen erzeugt bei möglichst geringem Flächenanteil der Quer-Mikrorillen und Einschnitte.

Eine weitere bevorzugte Ausführungsform sieht vor, dass die Einschnitte und die Mikrorillen sich zur axialen Richtung des Fahrzeugluftreifens mit einer Abweichung von höchstens um 30°, bevorzugt höchstens um 25°, besonders bevorzugt höchstens um 20° und weiter bevorzugt höchstens um 5° auf der Umfangsfläche des Fahrzeugreifens erstrecken. Besonders bevorzugt sind die Einschnitte und die Mikrorillen in der axialen Richtung des Fahrzeugluftreifens ausgerichtet. Eine derartige Ausrichtung der Einschnitte und Mikrorillen ermöglicht eine besonders hohe Kraftübertragung in Umfangsrichtung sowie in axialer Richtung bei strukturierten Untergründen. Weiterhin werden kleine Teilflächen ermöglicht, wobei die Kontaktfläche auf glattem Eis durch die Länge der Einschnitte und Mikrorillen in möglichst geringem Maß verringert wird.

Eine weitere bevorzugte Ausführungsform sieht vor, dass zwischen den Einschnitten und den Quer-Mikrorillen ein Winkel a zwischen 50° und 130° bevorzugt zwischen 65° und 115° und besonders bevorzugt zwischen 80° und 100° gebildet wird. Besonders bevorzugt ist ein Winkel a von 90° zwischen den Einschnitten und den Quer-Mikrorillen. Durch ein Winkel a, der möglichst weit einen Winkel von 90° angenähert ist, werden möglichst kleine Teilflächen bei möglichst kurzen Einschnitten und Quer-Mikrorillen ermöglicht. Die Kontaktfläche auf glattem Eis wird vergrößert.

Eine weitere bevorzugte Ausführungsform sieht vor, dass die Einschnitte eine Breite von 0,5 mm bis 0,6 mm und beziehungsweise oder an ihrer tiefsten Stelle eine Tiefe von mindestens 70% aufweisen. Die beschriebenen Einschnitte ermöglichen eine ausreichende Flexibilität für einen optimalen Fräswinkel auf Schnee sowie einen hohen Kantendruck sowohl auf glattem als auf rauem Eis. Die Flexibilität ermöglicht auf rauem Eis durch Anschmiegen eine gute Haftung. Dies wird aufgrund der großen Tiefe auch bei teilweise abgefahrenem Profil ermöglicht.

Eine weitere bevorzugte Ausführungsform sieht vor, dass die schulterseitigen Blöcke und die mittleren Blöcke durch Kreuzen der Quer-Mikrorillen mit den Einschnitten und mit den Mikrorillen jeweils in Teilflächen unterteilt sind, wobei die Teilflächen zu benachbarten Teilflächen flexibel an den Blöcken angebunden sind, wobei die Teilflächen der schulterseitigen Blöcke eine Größe von kleiner 100 mm² bevorzugt kleiner 80 mm² und weiter bevorzugt kleiner 60 mm² und die Teilflächen der mittleren Blöcke eine Größe von kleiner 60 mm² bevorzugt kleiner 50 mm² und weiter bevorzugt kleiner 40 mm² aufweisen. Eine Größe der Teilflächen von höchstens 100 mm² und bevorzugt kleiner ermöglicht es im besonderen Maße in feine Strukturen, insbesondere von aufgerautem Eis, eine höhere Kraft zu übertragen. Derartige Teilflächen gelangen in Aussparungen dieser feinen Strukturen und können aufgrund ihrer flexiblen Anbindung über einen relativ langen Zeitraum Kraft in diese Struktur übertragen.

Eine weitere bevorzugte Ausführungsform sieht vor, dass die Einschnitte auf dem Umfang der Lauffläche sinusförmig und beziehungsweise oder zickzackförmig verlaufen sowie bevorzugt in radialer Richtung eine Ausbauchung aufweisen. Der Verlauf der Einschnitte führt zu einem erhöhten Kantenanteil in Umfangsrichtung und erhöhte die Haftung auf rauem Eis.

Die Erfindung lässt zahlreiche Ausführungsformen zu. Zur weiteren Verdeutlichung ihres Grundprinzips sind zwei davon in den Zeichnungen dargestellt und werden nachfolgend beschrieben. Diese zeigen in
Fig. 1 eine Draufsicht auf einen mittleren Block eines Fahrzeugluftreifens;
Fig. 2 eine Draufsicht auf einen schulterseitigen Block eines Fahrzeugluftreifens.

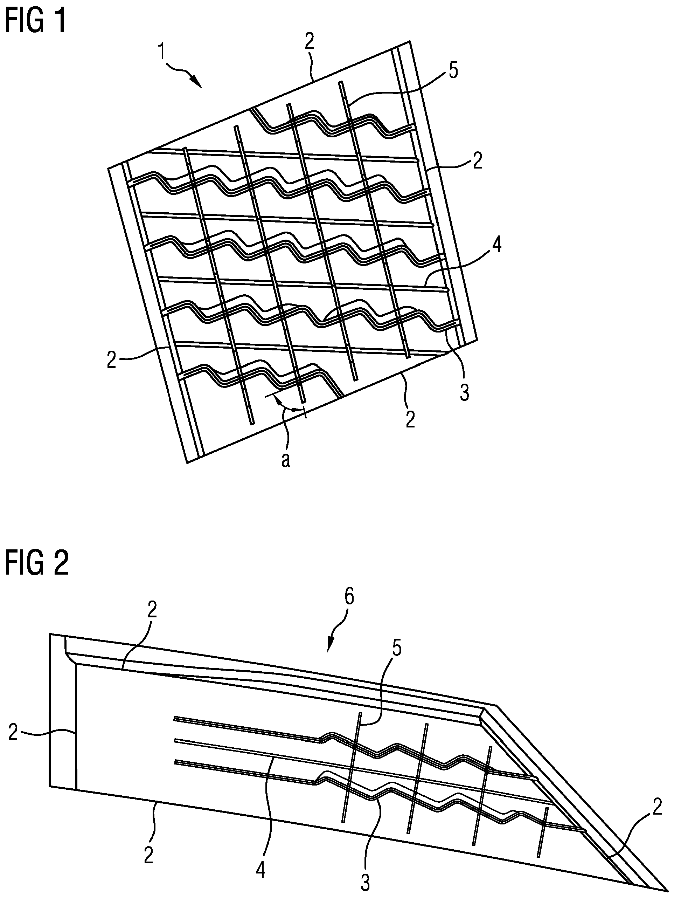

Figur 1 zeigt eine Draufsicht auf einen mittleren Block 1 eines Fahrzeugluftreifens mit einer nahezu quadratischen Oberfläche, die durch Blockkanten 2 begrenzt wird, wobei die Oberfläche Einschnitte 3 aufweist. Die Einschnitte 3 erstrecken sich auf der Umfangsfläche des Reifens, also in Umfangsrichtung sowie in axialer Richtung des Reifens, zickzackförmig. Weiterhin weisen die Einschnitte 3 in radialer Richtung des Reifens eine zickzackförmige Geometrie auf. Die Einschnitte 3 verlaufen jeweils bis zu den Blockkanten 2 des Blocks 1 sowie im Wesentlichen parallel zueinander. Überwiegend parallel und abwechselnd zu den Einschnitten 3 angeordnet verlaufen geradlinig Mikrorillen 4 ebenfalls jeweils bis zu den Blockkanten 2 des mittleren Blocks 1. Die Mikrorillen 4 sind zu den Einschnitten 3 beanstandet und kreuzen diese nicht. Auf der Umfangsfläche verlaufen Quer-Mikrorillen 5 nahezu senkrecht zu den Mikrorillen 4. Die Quer-Mikrorillen 5 verlaufen geradlinig über den mittleren Block 1 und enden mit einem Abstand zu den Blockkanten 2 des mittleren Blocks 1, der der dreifachen Breite der Quer-Mikrorille 5 entspricht. Die Quer-Mikrorillen 5 kreuzen die Mikrorillen 4 sowie die Einschnitte 3 unter einem Winkel a, wodurch Teilflächen erzeugt werden, die unabhängig voneinander und flexibel zueinander an dem mittleren Block 1 angebunden sind.

In Figur 2 ist eine Draufsicht auf einen schulterseitigen Block 6 eines Fahrzeugluftreifens dargestellt, der eine gestreckte auf einer Seite spitz zulaufende Oberflächengeometrie aufweist. Der schulterseitige Block 6 weist zwei parallel verlaufende Einschnitte 3 auf, die auf der Umfangsfläche sowie in radialer Richtung des Reifens zickzackförmig verlaufen. Zwischen den Einschnitten 3 verläuft überwiegend parallel sowie geradlinig und zu den Einschnitten 3 beanstandet eine Mikrorille 4. Die Einschnitte 3 sowie die Mikrorille 4 verlaufen von einer Blockkante 2 des schulterseitigen Blocks 6, dem spitz zulaufenden Rand, überwiegend parallel zu den längeren Blockkanten 2 des schulterseitigen Blocks 6 und enden mit einem Abstand zur gegenüberliegenden Blockkante 2 des schulterseitigen Blocks 6. Die Einschnitte 3 sowie die Mikrorille 4 erstrecken sich über etwa drei Viertel der Breite des schulterseitigen Blocks 6. Auf der Umfangsfläche verlaufen Quer-Mikrorillen 5 nahezu senkrecht zur Mikrorille 4 sowie nahezu senkrecht zu den Einschnitten 3. Die vier Quer-Mikrorillen 5 enden mit einem Abstand zu den Blockkanten 2 des schulterseitigen Blocks 6, der dem dreifachen der Breite der Quer-Mikrorillen 5 entspricht. Die Quer-Mikrorillen 5 sind voneinander beanstandet auf der spitz zulaufenden Hälfte des schulterseitigen Blocks 6 angeordnet. Die Quer-Mikrorillen 5 kreuzen die Einschnitte 3 sowie die Mikrorille 4, so dass Teilflächen erzeugt werden, die unabhängig voneinander und flexibel zueinander an dem schulterseitigen Block 6 angebunden sind.

Die durch die Quer-Mikrorillen 5 und die Einschnitte 3 sowie die Mikrorillen 4 erzeugten Teilflächen sind an dem spitz zulaufenden Ende des schulterseitigen Blocks 6 angeordnet, wobei dieses Ende zum mittleren Bereich der Reifenlauffläche angeordnet ist. Es wird somit durch die Teilflächen im mittleren Bereich der Reifenlauffläche eine höhere Kraftübertragung vom Reifen bei Eis oder Schnee auf den Untergrund ermöglicht. Der Randbereich der Reifenlauffläche weist keine Teilflächen auf und verformt sich bei Kurvenfahrten lediglich geringfügig und ermöglicht hierdurch eine gute Kraftübertragung bei Kurvenfahrten, insbesondere bei griffigem Untergrund.

### Bezugszeichenliste

- 1: mittlere Block
- 2: Blockkante
- 3: Einschnitt
- 4: Mikrorille
- 5: Quer-Mikrorille

- 6: schulterseitige Block
- a: Winkel

## Patentansprüche

1. Fahrzeugluftreifen, insbesondere ein PKW-Winterreifen, mit einem Laufstreifen mit in den Randbereichen des Laufstreifens angeordneten sich in axialer Richtung erstreckenden schulterseitigen Blöcken (6) mit überwiegend parallel zueinander verlaufenden Blockkanten (2) und mit mittleren Blöcken (1) mit überwiegend parallel zueinander verlaufenden Blockkanten (2) zwischen den in dem einen Randbereich des Laufstreifens angeordneten, schulterseitigen Blöcken (6) und den in dem anderen Randbereich des Laufstreifens angeordneten, schulterseitigen Blöcken (6), wobei die überwiegend parallel zueinander verlaufenden Blockkanten (2) der mittleren Blöcke (1) höchstens um einen Winkel von kleiner als 30° bevorzugt kleiner als 20° und weiter bevorzugt kleiner als 10° divergieren und die überwiegend parallel zueinander verlaufenden Blockkanten (2) der schulterseitigen Blöcke (6) um einen Winkel von kleiner als 30° bevorzugt kleiner als 20° und weiter bevorzugt kleiner als 10° divergieren,
wobei die schulterseitigen Blöcke (6) und die mittleren Blöcke (1) jeweils mit zumindest zwei in Draufsicht parallel zueinander verlaufenden sich zur axialen Richtung des Fahrzeugluftreifens mit einer Abweichung von kleiner als 45° auf der Umfangsfläche des Fahrzeugluftreifens erstreckenden Einschnitten (3) versehen sind, welche eine Breite von 0,4 mm bis 0,8 mm und an ihrer tiefsten Stelle eine Tiefe von mindestens 50% der Profiltiefe aufweisen, wobei die schulterseitigen Blöcke (6) und die mittleren Blöcke (1) jeweils mit mehreren Mikrorillen (4) mit einer Breite von 0,1 mm bis 0,3 mm und einer Tiefe von 0,1 mm bis 0,3 mm versehen sind, wobei sich die Mikrorillen (4) zu den Einschnitten (3) in Draufsicht parallel und kreuzungsfrei erstrecken, wobei die schulterseitigen Blöcke (6) jeweils mit zumindest zwei in Draufsicht parallel zueinander verlaufenden sich überwiegend in Umfangsrichtung des Fahrzeugluftreifens erstreckenden Quer-Mikrorillen (5) mit einer Breite von 0,2 mm bis 0,6 mm und einer Tiefe von 0,6 mm bis 3 mm versehen sind,
**dadurch gekennzeichnet,**
**dass** die mittleren Blöcke (1) jeweils mit zumindest zwei in Draufsicht parallel zueinander verlaufenden sich überwiegend in Umfangsrichtung des Fahrzeugluftreifens erstreckenden Quer-Mikrorillen (5) mit einer Breite von 0,2 mm bis 0,6 mm und einer Tiefe von 0,6 mm bis 3 mm versehen sind,
wobei der Abstand zwischen zwei Quer-Mikrorillen (5) in schulterseitigen Blöcken (6) größer als 3 mm und kleiner als 10 mm ist und
wobei der Abstand zwischen zwei Quer-Mikrorillen (5) in mittleren Blöcken (1) größer als 2 mm und kleiner als 7 mm ist.

2. Fahrzeugluftreifen nach Anspruch 1, **dadurch gekennzeichnet, dass** der Abstand zwischen zwei Einschnitten (3) in schulterseitigen Blöcken (6) und/oder in mittleren Blöcken (1) kleiner als 7 mm ist.

3. Fahrzeugluftreifen nach Anspruch 1 oder 2, **dadurch gekennzeichnet, dass** der Abstand zwischen zwei Quer-Mikrorillen (5) in schulterseitigen Blöcken (6) und/oder in mittleren Blöcken (1) kleiner ist als der doppelte, bevorzugt der anderthalbfache und weiter bevorzugt der einfache Abstand zwischen zwei Einschnitten (3).

4. Fahrzeugluftreifen nach einem der vorangehenden Ansprüche, **dadurch gekennzeichnet, dass** die Einschnitte (3) und die Mikrorillen (4) sich zur axialen Richtung des Fahrzeugluftreifens mit einer Abweichung von höchstens um 30°, bevorzugt höchstens um 25°, besonders bevorzugt höchstens um 20° und weiter bevorzugt höchstens um 5° auf der Umfangsfläche des Fahrzeugreifens erstrecken.

5. Fahrzeugluftreifen nach einem der vorangehenden Ansprüche, **dadurch gekennzeichnet, dass** zwischen den Einschnitten (3) und den Quer-Mikrorillen (5) ein Winkel a zwischen 50° und 130° bevorzugt zwischen 65° und 115° und besonders bevorzugt zwischen 80° und 100° gebildet wird.

6. Fahrzeugluftreifen nach einem der vorangehenden Ansprüche, **dadurch gekennzeichnet, dass** die Einschnitte (3) eine Breite von 0,5 mm bis 0,6 mm und/oder an ihrer tiefsten Stelle eine Tiefe von mindestens 70% aufweisen.

7. Fahrzeugluftreifen nach einem der vorangehenden Ansprüche, **dadurch gekennzeichnet, dass** die schulterseitigen Blöcke (6) und die mittleren Blöcke (1) durch Kreuzen der Quer-Mikrorillen (5) mit den Einschnitten (3) und mit den Mikrorillen (4) jeweils in Teilflächen unterteilt sind, wobei die Teilflächen zu benachbarten Teilflächen flexibel an den mittleren Blöcken (1) und schulterseitigen Blöcken (6) angebunden sind, wobei die Teilflächen der schulterseitigen Blöcke (6) eine Größe von kleiner 100 mm² bevorzugt kleiner 80 mm² und weiter bevorzugt kleiner 60 mm² und die Teilflächen der mittleren Blöcke (1) eine Größe von kleiner 60 mm² bevorzugt kleiner 50 mm² und weiter bevorzugt kleiner 40 mm² aufweisen.

8. Fahrzeugluftreifen nach einem der vorangehenden Ansprüche, **dadurch gekennzeichnet, dass** die Einschnitte (3) auf dem Umfang der Lauffläche sinusförmig und/oder zickzackförmig verlaufen sowie bevorzugt in radialer Richtung eine Ausbauchung aufweisen.

## Claims

1. Pneumatic vehicle tyre, in particular a winter car tyre, with a tread having shoulder-side blocks (6), which are arranged in the peripheral regions of the tread, extend in the axial direction and have block edges (2) running substantially parallel to one another, and having central blocks (1) with block edges (2) running substantially parallel to one another between the shoulder-side blocks (6) arranged in the one peripheral region of the tread and the shoulder-side blocks (6) arranged in the other peripheral region of the tread, the block edges (2) of the central blocks (1) that run substantially parallel to one another diverging at most by an angle of less than 30°, preferably less than 20°, and more preferably less than 10°, and the block edges (2) of the shoulder-side blocks (6) that run substantially parallel to one another diverging by an angle of less than 30°, preferably less than 20°, and more preferably less than 10°,
the shoulder-side blocks (6) and the central blocks (1) being provided in each case with at least two sipes (3), which run parallel to one another in plan view, extend on the circumferential surface of the pneumatic vehicle tyre with a deviation of less than 45° in relation to the axial direction of the pneumatic vehicle tyre and have a width of 0.4 mm to 0.8 mm and a depth at their deepest point of at least 50% of the profile depth, the shoulder-side blocks (6) and the central blocks (1) being provided in each case with multiple micro grooves (4) with a width of 0.1 mm to 0.3 mm and a depth of 0.1 mm to 0.3 mm, the micro grooves (4) extending in plan view parallel to the sipes (3) and without crossing, the shoulder-side blocks (6) being provided in each case with at least two transverse micro grooves (5), which run parallel to one another in plan view, extend substantially in the circumferential surface of the pneumatic vehicle tyre and have a width of 0.2 mm to 0.6 mm and a depth of 0.6 mm to 3 mm,
**characterized**
**in that** the central blocks (1) are provided in each case with at least two transverse micro grooves (5), which run parallel to one another in plan view, extend substantially in the circumferential surface of the pneumatic vehicle tyre and have a width of 0.2 mm to 0.6 mm and a depth of 0.6 mm to 3 mm,
the distance between two transverse micro grooves (5) in shoulder-side blocks (6) being greater than 3 mm and less than 10 mm and
the distance between two transverse micro grooves (5) in central blocks (1) being greater than 2 mm and less than 7 mm.

2. Pneumatic vehicle tyre according to Claim 1, **characterized in that** the distance between two sipes (3) in shoulder-side blocks (6) and/or in central blocks (1) is less than 7 mm.

3. Pneumatic vehicle tyre according to Claim 1 or 2, **characterized in that** the distance between two transverse micro grooves (5) in shoulder-side blocks (6) and/or in central blocks (1) is less than twice, preferably one and a half times and more preferably once, the distance between two sipes (3).

4. Pneumatic vehicle tyre according to one of the preceding claims, **characterized in that** the sipes (3) and the micro grooves (4) extend on the circumferential surface of the vehicle tyre with a deviation of at most 30°, preferably at most 25°, particularly preferably at most 20° and more preferably at most by 5°, in relation to the axial direction of the pneumatic vehicle tyre.

5. Pneumatic vehicle tyre according to one of the preceding claims, **characterized in that** an angle a of between 50° and 130°, preferably between 65° and 115° and particularly preferably between 80° and 100°, is formed between the sipes (3) and the transverse micro grooves (5).

6. Pneumatic vehicle tyre according to one of the preceding claims, **characterized in that** the sipes (3) have a width of 0.5 mm to 0.6 mm and/or a depth at their deepest point of at least 70%.

7. Pneumatic vehicle tyre according to one of the preceding claims, **characterized in that** the shoulder-side blocks (6) and the central blocks (1) are divided in each case into subareas by the transverse micro grooves (5) crossing the sipes (3) and crossing the micro grooves (4), the subareas being attached to the central blocks (1) and shoulder-side blocks (6) flexibly in relation to adjacent subareas, the subareas of the shoulder-side blocks (6) having a size of less than 100 mm², preferably less than 80 mm² and more preferably less than 60 mm², and the subareas of the central blocks (1) having a size of less than 60 mm², preferably less than 50 mm² and more preferably less than 40 mm².

8. Pneumatic vehicle tyre according to one of the preceding claims, **characterized in that** the sipes (3) run on the circumference of the tread in a sinusoidal and/or zigzag form and preferably have a bulge in the radial direction.

## Revendications

1. Pneumatique de véhicule, en particulier pneu hiver de voiture de tourisme, comprenant une bande de roulement ayant des blocs côté épaulement (6) disposés dans les zones périphériques de la bande de roulement et s'étendant dans la direction axiale, comprenant des arêtes de blocs (2) s'étendant de manière majoritairement parallèle les unes aux autres, et ayant des blocs centraux (1) comprenant des arêtes de blocs (2) qui s'étendent de manière majoritairement parallèle les unes aux autres entre les blocs côté épaulement (6) disposés dans une zone périphérique de la bande de roulement et les blocs côté épaulement (6) disposés dans l'autre zone périphérique de la bande de roulement, les arêtes de blocs (2) qui s'étendent de manière majoritairement parallèle les unes aux autres des blocs centraux (1) divergeant au maximum d'un angle inférieur à 30°, de préférence inférieur à 20° et plus préférentiellement inférieur à 10°, et les arêtes de blocs (2) qui s'étendent de manière majoritairement parallèle les unes aux autres des blocs côté épaulement (6) divergeant d'un angle inférieur à 30°, de préférence inférieur à 20° et plus préférentiellement inférieur à 10°,
les blocs côté épaulement (6) et les blocs centraux (1) étant respectivement pourvus d'au moins deux entailles (3) s'étendant en vue de dessus parallèlement les unes aux autres par rapport à la direction axiale du pneumatique de véhicule avec un écart inférieur à 45° sur la surface circonférentielle du pneumatique de véhicule, qui présentent une largeur de 0,4 mm à 0,8 mm et, à leur point le plus profond, une profondeur d'au moins 50 % de la profondeur de la bande de roulement, les blocs côté épaulement (6) et les blocs centraux (1) étant respectivement pourvus de plusieurs microrainures (4) d'une largeur de 0,1 mm à 0,3 mm et d'une profondeur de 0,1 mm à 0,3 mm, les microrainures (4) s'étendant par rapport aux entailles (3) parallèlement et sans se croiser en vue de dessus, les blocs côté épaulement (6) étant respectivement pourvus d'au moins deux microrainures transversales (5) s'étendant en vue de dessus parallèlement les unes aux autres majoritairement dans la direction circonférentielle du pneumatique de véhicule, avec une largeur de 0,2 mm à 0,6 mm et une profondeur de 0,6 mm à 3 mm,
**caractérisé en ce que**
les blocs centraux (1) sont respectivement pourvus d'au moins deux microrainures transversales (5) s'étendant en vue de dessus parallèlement les unes aux autres majoritairement dans la direction circonférentielle du pneumatique de véhicule, avec une largeur de 0,2 mm à 0,6 mm et une profondeur de 0,6 mm à 3 mm,
la distance entre deux microrainures transversales (5) dans des blocs côté épaulement (6) étant supérieure à 3 mm et inférieure à 10 mm et
la distance entre deux microrainures transversales (5) dans des blocs centraux (1) étant supérieure à 2 mm et inférieure à 7 mm.

2. Pneumatique de véhicule selon la revendication 1, **caractérisé en ce que** la distance entre deux entailles (3) dans des blocs côté épaulement (6) et/ou dans des blocs centraux (1) est inférieure à 7 mm.

3. Pneumatique de véhicule selon la revendication 1 ou 2, **caractérisé en ce que** la distance entre deux microrainures transversales (5) dans des blocs côté épaulement (6) et/ou dans des blocs centraux (1) est inférieure au double, de préférence à une fois et demie et plus préférentiellement à la simple distance entre deux entailles (3).

4. Pneumatique de véhicule selon l'une des revendications précédentes, **caractérisé en ce que** les entailles (3) et les microrainures (4) s'étendent par rapport à la direction axiale du pneumatique de véhicule avec un écart d'au plus 30°, de préférence d'au plus 25°, plus préférentiellement d'au plus 20° et encore plus préférentiellement d'au plus 5° sur la surface circonférentielle du pneumatique de véhicule.

5. Pneumatique de véhicule selon l'une des revendications précédentes, **caractérisé en ce qu'**un angle a compris entre 50° et 130°, de préférence entre 65° et 115° et plus préférentiellement entre 80° et 100°, est formé entre les entailles (3) et les microrainures transversales (5).

6. Pneumatique de véhicule selon l'une des revendications précédentes, **caractérisé en ce que** les entailles (3) présentent une largeur de 0,5 mm à 0,6 mm et/ou, à leur point le plus profond, une profondeur d'au moins 70 %.

7. Pneumatique de véhicule selon l'une des revendications précédentes, **caractérisé en ce que** les blocs côté épaulement (6) et les blocs centraux (1) sont respectivement divisés en sous-surfaces par le croisement des microrainures transversales (5) avec les entailles (3) et avec les microrainures (4), les sous-surfaces étant reliées de manière flexible aux sous-surfaces adjacentes au niveau des blocs centraux (1) et des blocs côté épaulement (6), les sous-surfaces des blocs côté épaulement (6) présentant une taille inférieure à 100 mm², de préférence inférieure à 80 mm² et plus préférentiellement inférieure à 60 mm², et les sous-surfaces des blocs centraux (1) présentant une taille inférieure à 60 mm², de préférence inférieure à 50 mm² et plus préférentiellement inférieure à 40 mm².

8. Pneumatique de véhicule selon l'une des revendications précédentes, **caractérisé en ce que** les entailles (3) s'étendent sur le pourtour de la surface de roulement de manière sinusoïdale et/ou en zigzag et présentent de préférence un renflement dans la direction radiale.
